# EUROPEAN PATENT APPLICATION

(11) **EP 2 945 217 A1**
(43) Date of publication of application: **18.11.2015**
(21) Application number: 15166195.6
(22) Date of filing: 04.05.2015
(51) Int. Cl.: H01M 10/613, H01M 10/625, H01M 10/6556, H01M 10/6569, F28D 1/02, F28D 1/04, F28D 1/053, F28F 9/06

(54) **COOLING DEVICE FOR A BATTERY PACK**

(30) Priority: 16.05.2014 DE 102014106941
(71) Applicant: Valeo Klimasysteme GmbH, 96476 Bad Rodach (DE)
(72) Inventor: Haussmann, Roland, 68169 Wiesloch (DE)
(74) Representative: Metz, Gaëlle

(57) **Abstract**

A cooling device (14) for a battery pack (12) of a drive battery assembly (10) of a hydrogen, electric or hybrid vehicle is described, having at least two separate cooling elements (16) arranged alongside one another which each exhibit a plurality of channels (18) conducting a cooling fluid to transport heat energy away. The cooling device (14) comprises at least one preloading unit (20) which presses the at least two cooling elements (16) against one side (22) of the battery pack (12) to improve thermal contact.

## Description

The invention relates to a cooling device for a battery pack of a drive battery assembly of a hydrogen, electric or hybrid vehicle.

Due to the environmental impact generated by vehicles with pure combustion engines, the development of vehicle engines is moving increasingly towards electric drives which are intended to replace conventional combustion engines, at least in part. The electric drives typically have a drive battery assembly by means of which the electric drive generates its power. The drive battery assembly has at least one battery pack in this case which is made up of at least one battery module comprising a plurality of battery cells. The battery packs or battery modules used are high-voltage batteries which can have voltages of between 130 and 360 V. Because the batteries emit heat during charging and discharging they have to be cooled, so that the batteries are kept within an optimum range of action. This is achieved by means of a cooling device through which a cooling fluid or coolant flows. Cooling the batteries also extends their life in addition. Typically, the battery cells must be kept at below 40 to 50°C, this being dependent on the kind of battery used.

Cooling devices are known from the prior art which work with a coolant (for example R134a) which, however, can no longer be used due to recent directives and has to be replaced by the coolant R744. Because the coolant R744 makes greater requirements in terms of the bursting pressure of the cooling devices (over 260 bar instead of 55 bar), the cooling devices known from the prior art cannot be used with the new coolant R744. Consequently, in order to use the cooling devices known from the prior art with the coolant R744, the housing walls of the cooling device are strengthened, so that they exhibit the required higher bursting pressure. However, the consequence of this is that the cooling effect is poorer since the housing wall is thicker. In addition, the weight and the installation space required for the cooling device also increase, which is likewise detrimental as this reduces the efficiency of the electric drive as a whole and also limits the other motor components.

The problem addressed by the invention is that of creating a cooling device which has a small installation space and can be operated using the coolant R744.

The problem addressed by the invention is solved by a cooling device for a battery pack of a drive battery assembly of a hydrogen, electric or hybrid vehicle having at least two separate cooling elements arranged alongside one another which each exhibit a plurality of channels conducting a cooling fluid to transport heat energy away, wherein the cooling device comprises at least one preloading unit which presses the at least two cooling elements against one side of the battery pack to improve thermal contact.

The fundamental idea underlying the invention is that of configuring the cooling elements in such a manner that they exhibit good thermal contact with the battery pack, despite the usability of the coolant R744, and at the same time are space-saving and lightweight in design. This is achieved in that the cooling elements exhibit a plurality of channels, as a result of which the size of the individual cooling elements can be kept small despite the greater requirements in terms of the bursting pressure, since the required bursting pressure can be more easily guaranteed due to the many individual channels. The increase in weight of the cooling elements associated with the greater required bursting pressure is minimal, as it only results from the partition walls between the individual channels. This weight increase is, however, significantly smaller than that associated with a reinforcement of the outer walls. The multi-part design of the cooling device due to the separately configured cooling elements also increases the flexibility of the cooling device.

One aspect of the invention envisages that the channels have a hydraulic diameter of 0.5 mm to 1.5 mm, particularly 0.7 mm to 1 mm. Due to the small diameter of the individual channels in the cooling element, despite the high requirements made of the bursting pressure, the wall thickness of the channels and therefore also of the cooling elements can be kept small. The outer dimensions of the individual cooling elements are even smaller in this case, compared with the cooling elements known from the prior art which use the previous coolants, as a result of which the installation space required by the cooling device according to the invention is reduced.

The channels of the cooling element may, for example, have a circular-cylindrical or an elongate cross section, in particular with opposite semicircular ends. By means of this cross-sectional geometry, the required bursting pressure can be guaranteed with a minimal wall thickness of the cooling elements. Round cross sections of the channels also ensure that tension occurring due to the internal pressure in the pipe wall is evenly distributed over the walls of the channels.

In addition, the channels may exhibit a hydraulic diameter which is selected such that the entire cooling element is flexible. The smaller hydraulic diameter of the channels and the resulting small wall thickness also mean that the thickness of the cooling elements can be kept small, so that the entire cooling element is flexible due to the small bending resistance moment. This results in better thermal contact between the cooling element and the battery pack, as the flexibility and preloading of the cooling elements means that irregularities on the battery pack can be smoothed out.

According to a further aspect of the invention, a separate preloading unit in each case presses a cooling element against the side of the battery pack, in particular a spring element in each case pretensions a cooling element elastically. The thermal contact between the cooling element and the battery pack is thereby further improved, as a homogeneous, planar contact is ensured.

In addition, a carrier may be provided between the cooling elements and the preloading unit, in particular one carrier per cooling element. The carrier is used for the thermal decoupling of the cooling elements and the preloading unit, so that the preloading unit is thermally decoupled from the hot battery pack. In addition, it can be ensured via the carrier that the preloading unit acts on the cooling element uniformly, as a result of which contact between the cooling element and the battery pack is once again improved, compared with two large plates positioned side by side.

According to a further aspect of the invention, the cooling device comprises at least one collector and/or distributor with which the cooling elements are each coupled at at least one end, particularly at one end with a collector and at the other end with a distributor. By means of the collector and the distributor, the cooling fluid is distributed within the cooling device to the individual cooling elements and the channels contained therein or else collected from them, in order to be diverted to another cooling element. The collector and the distributor are therefore used to guide the cooling fluid within the cooling device. The collector/distributor may also be configured as a mixing element, which both distributes and collects the cooling fluid.

The collector and/or distributor may be of multi-part, in particular two-part, design, having at least one line element for the fluidic coupling of the cooling elements and a connecting element which seals at least one cooling element in respect of the line element. The two-piece design of the collector and/or the distributor means that assembly can be made easier. The cooling fluid leaving the cooling elements is therefore collected and/or distributed via the line element. By sealing the two parts in respect of one another, a cooling fluid flow within the collector and/or the distributor is also possible.

In particular, the line element exhibits at least one receiving opening for the end receiving of the cooling elements. Thanks to the receiving opening, a secure mounting of the cooling elements on the line element can be achieved.

The line element may, in addition, exhibit two projecting limbs, between which at least one cooling element, preferably a plurality of cooling elements, is received. It is ensured by means of the projecting limbs that the cooling element received is received in a non-tilting manner, so that said cooling element is securely coupled to the line element. The receiving opening is, in addition, defined by the two projecting limbs. Furthermore, the cooling elements received can be connected to the limbs in a non-removable manner, for example soldered.

In particular, the limbs are enclosed by the connecting element in a clamp-like and positively locking manner and/or the connecting element encloses the assigned end of the cooling element in a sealing manner.

According to a further aspect of the invention, the connecting element seals a plurality of cooling elements to a common line element and seals the common receiving means opening between adjacent cooling elements, wherein the connecting element has a clamping collar for each cooling element in the region of the receiving means opening, which clamping collar keeps the cooling element sealing. In this way, assembly is made easier as the plurality of cooling elements can be simultaneously connected to a connecting element which is coupled with the line element. The clamping collar also ensures that the cooling elements are connected safely and in a sealing manner to the collector and/or the distributor.

In this case, the limbs of the line element are received in a positively locking manner between the clamping collar of the connecting element and the outer ends of the connecting element. This results in particularly simple assembly, as the cooling elements can initially be simply inserted into the clamping collar at a preassembly stage. The cooling elements can then be fixedly connected to the clamping collar or the connecting element, for example by soldering.

A further aspect of the invention envisages that the collector and/or the distributor exhibit or exhibits a first and a second channel via which at least two cooling elements are in fluid connection with one another. By means of the two channels, different cooling fluid distributions can be realized in the cooling device. By means of the first channel, for example, two adjacent cooling elements can be fluid-connected to one another, wherein two outer cooling elements are in fluid connection with one another via the second channel. As a general rule, the flow of the cooling fluid can be individually adjusted via the channels.

In particular, the first and the second channel run parallel to one another. One of the two channels may be a bypass channel for the other channel, for example, so that a homogeneous distribution of the cooling fluid is guaranteed.

The two channels run transversely, for example, particularly at right angles to the channels in the cooling elements.

The two channels may be separated from one another by a partition wall lying directly in between them. In this way, the required bursting pressure in the collector and/or in the distributor can be achieved despite small wall thicknesses. In the partition wall located therebetween, an opening can, in particular, be provided, via which the two channels are in fluid connection.

A further aspect of the invention envisages that the first and/or second channel has sections separated from one another in flow terms which are assigned to different cooling elements. The cooling fluid distribution of the cooling device can thereby be adjusted correspondingly. It is particularly appropriate for the cooling fluid distribution to be adjusted via the sections in such a manner that the ratio between cooling element sections with already evaporated cooling fluid and cooling element sections with liquid, unevaporated cooling fluid is the same in all cooling elements with a parallel flow configuration.

The first and/or second channel may have a hydraulic diameter of between 3 mm and 6 mm, in particular 4 mm and 5 mm. Based on the configuration of two channels, the diameters of these channels can be kept small. This enables the collector and/or the distributor to be operated using a coolant that makes greater requirements in terms of bursting pressure. At the same time, weight can be saved in this way. As a general rule, the wall thickness behaves linearly relative to the diameter, so that when there is a small diameter, a smaller wall thickness is required, in order to guarantee the same required bursting pressure. Conversely, this means that a smaller diameter guarantees a greater bursting pressure with the same wall thickness.

The cooling elements may be extruded profiles, in particular plate-shaped profiles. This means that a simple production of the cooling elements with the channels disposed therein is possible. The plate shape also ensures that the outer surfaces of the cooling elements are adjusted in such a manner that one of the main surfaces is used to make contact with the battery pack. This increases the efficiency of the cooling device.

Further advantages and properties of the invention result from the following description and the drawings to which reference is made. In the drawings:
- Figure 1 shows a schematic cross-sectional representation of a drive battery assembly,
- Figure 2 shows a schematic cross-sectional representation of a cooling element according to a first embodiment,
- Figure 3 shows a schematic cross-sectional view of a cooling element according to a second embodiment,
- Figure 4 shows a cross-sectional view of the cooling device in the region of a collector and/or distributor,
- Figure 5 shows a further cross-sectional view of the cooling device in the region of a collector and/or distributor on another plane,
- Figure 6 shows a schematic representation of the cooling fluid flow in a cooling device according to the invention, according to a first embodiment, only depicted sectionally,
- Figure 7 shows a schematic representation of the cooling fluid flow in a cooling device according to the invention, according to a second embodiment, only depicted sectionally, and
- Figure 8 shows a schematic representation of the cooling fluid flow in a cooling device according to the invention according to a third embodiment.

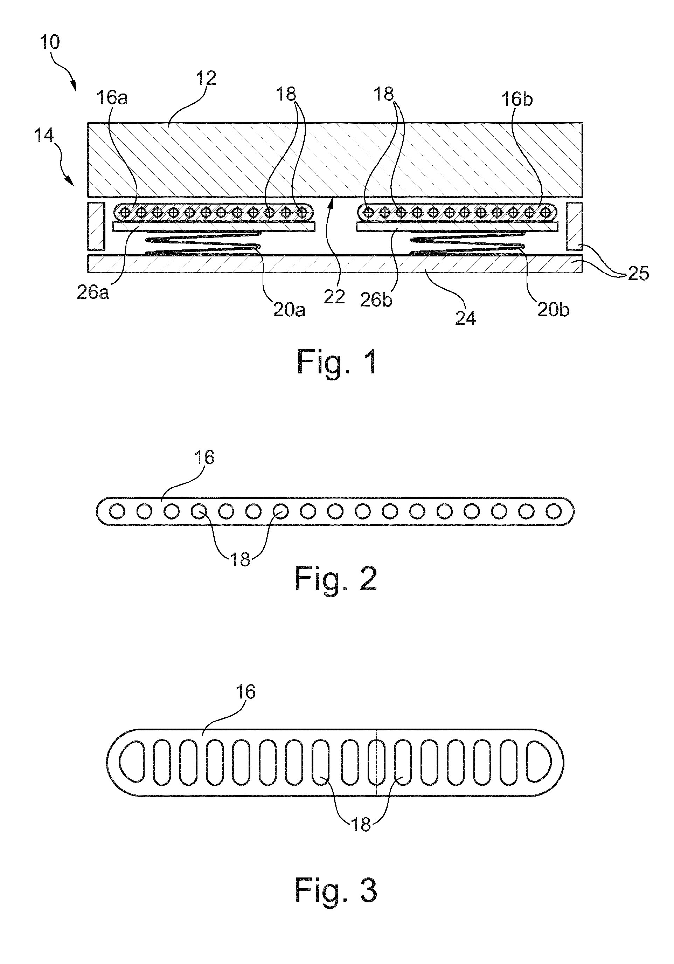

In Figure 1, a drive battery assembly 10 is shown schematically in cross section, which drive battery assembly comprises a battery pack 12, which is a battery module exhibiting a plurality of battery cells, and also a cooling device 14.

The cooling device 14 in the embodiment shown exhibits two separately configured cooling elements 16a, 16b which are spaced apart from one another laterally and each have a plurality of parallel channels 18 through which a cooling fluid or coolant for transporting heat energy away flows. The two cooling elements 16a, 16b are particularly identically configured.

The cooling device 14 further comprises two separate preloading units 20a, 20b, via which the two cooling elements 16a, 16b are pushed against a flat side 22 of the battery pack 12. The side 22 is the underside of the battery pack 12 which is to be cooled.

The preloading units 20a, 20b are configured as spring elements in the embodiment shown, which spring elements are supported at a first respective end by a floor section 24 of a housing 25 of the battery pack 12, in order to press the cooling elements 16 against the side 22 in a gap-free manner. The gap shown in Figure 1 serves only to make the individual parts easier to distinguish and does not exist in practice.

In addition, a carrier 26a, 26b is disposed between each of the cooling elements 16a, 16b and the other ends of the preloading units 20a, 20b, so that the cooling elements 16 are supported by the carriers 26. The preloading units 20 therefore press the cooling elements 16 indirectly via the carriers 26 against the underside 22 of the battery pack 12.

The carriers 26a, 26b may be formed from a material that exhibits a low heat transfer coefficient, so that a thermal decoupling of the cooling elements 16 and the preloading units 20 is created. In this way, thermal stresses on the preloading units 20 are avoided.

In addition, a homogeneous contact of the cooling elements 16 with the side 22 to be cooled is achieved using the carrier 26, so that the battery pack 12 can be effectively and efficiently cooled.

Alternatively, a carrier 26 for two or more cooling elements 16 can also be provided which is acted upon by a preloading unit 20 or a plurality of preloading units 20.

Different cross sections of two exemplary embodiments of the cooling elements 16 emerge from Figures 2 and 3.

In the embodiment shown in Figure 2, the channels 18 have a circular-cylindrical cross section.

According to the embodiment shown in Figure 3, the channels 18 have an elongate cross section, wherein the channels 18 have opposite semicircular ends in cross section.

The hydraulic diameter of the channels 18 of all embodiments may be between 0.5 mm and 1.5 mm, in particular 0.7 mm and 1 mm, in this case.

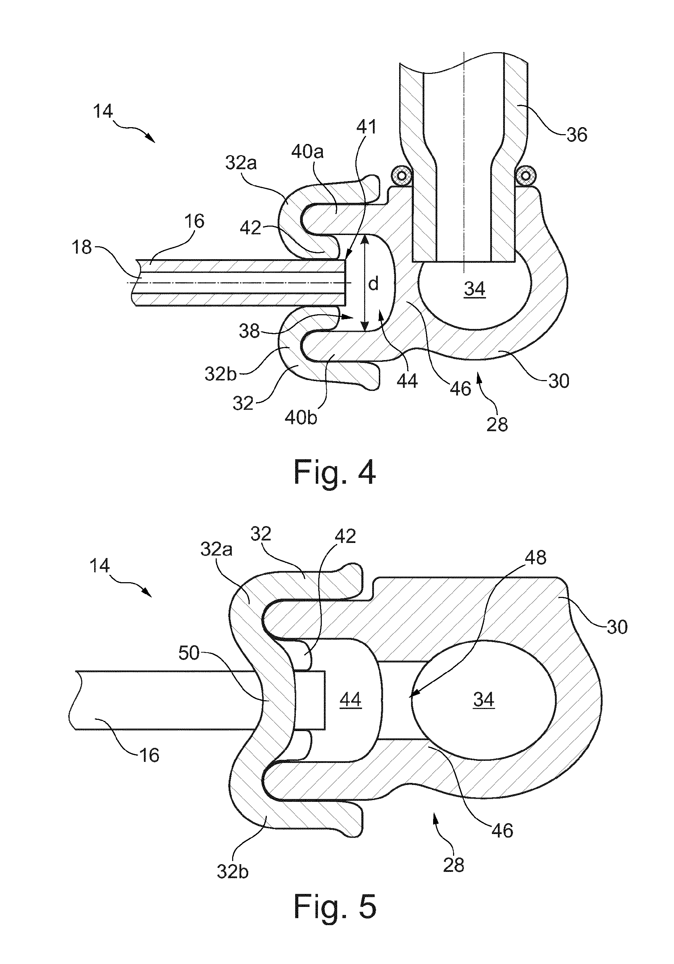

In Figure 4, the cooling device 14 is shown in cross section in the region of a collector and/or distributor 28 with which a cooling element 16 is coupled. Whether it is a collector or distributor ultimately depends on the flow direction of the cooling fluid.

The collector/distributor 28 is configured in two parts in the embodiment shown, where it comprises a line element 30 and also a connecting element 32.

The line element 30 has a first channel 34 with which an inlet and/or outlet pipe 36 has a fluid connection, so that the cooling fluid can be fed to the individual cooling elements 16 and removed from them.

Since the inlet pipe 36 is fluid-coupled with the first channel 34 of the distributor 28, for example, the cooling fluid from the first channel 34 must reach the cooling element 16 and, conversely, the cooling fluid from the cooling element 16 must reach the first channel 34 and an outlet pipe. The way in which this happens is described below.

It initially emerges from Figure 4 that the line element 30 comprises a receiving opening 38 which is formed by two projecting limbs 40a, 40b. The cooling element 16 is received in the receiving opening 38, wherein the cooling element 16 is inserted at one end 41 into the receiving opening 38.

The cooling element 16 is coupled via the connecting element 32 to the line element 30, so that it is held securely. For this purpose, the connecting element 32 is configured such that it encloses the limbs 40a, 40b of the line element 30 with a clamping limb 32a, 32b in each case. The part of the connecting element 32 that bears against the inner surfaces of the limbs 40a, 40b turned towards one another is referred to as the clamping collar 42.

The limbs 40a, 40b of the line element 30 are clamped during assembly between the clamping collar 42 and the clamping limbs 32a, 32b by virtue of the dimensions of the connecting element 32. In this way, the cooling element 16 is coupled in a sealing manner with the line element 30.

The limbs 40a, 40b may, in particular, exhibit a distance d from one another which lies between 3 mm and 6 mm, particularly 4 mm and 5 mm. Consequently, the distance d roughly corresponds to four times the outer geometry of a cooling element 16.

By coupling, in particular soldering, the connecting element 32 to the line element 30, a second channel 44 is formed. This second channel 44 runs substantially parallel to the first channel 34, wherein a partition wall 46 is formed in the line element 30 between the two channels 34, 44.

Via the second channel 44, all channels 18 of a cooling element 16 can, in addition, be fluid-connected to one another.

A plurality of cooling elements 16 may also be coupled with the second channel 44.

The two channels 34, 44 have, in addition, a hydraulic diameter which is between 3 mm and 6 mm in size, particularly between 4 mm and 5 mm.

The same region is shown in Figure 5 as in Figure 4, wherein the cross section lies slightly below the drawing plane in Figure 4, as the cooling element 16 in Figure 5 is not depicted in section.

It emerges from Figure 5 that the partition wall 46 which separates the two channels 34, 44 from one another has at least one opening 48 via which the two channels 34, 44 are flow-connected to one another.

The cooling fluid fed in therefore reaches the cooling elements 16 attached to the second channel 44 via the inlet pipe 36, the first channel 34, the opening 48 and the second channel 44, for example.

In addition, it emerges from Figure 5 that the connecting element 32 is in a continuous clamp form, wherein the connecting element 32 has a middle section 50 which is arranged between the two clamping limbs 32a, 32b.

Insofar as the connecting element 32 does not receive a cooling element 16 in one section, as shown in Figure 5, the connecting element 32 has no clamping collar 42 for a cooling element 16 in this section.

The connecting element 32 is configured such that the middle section 50 is curved inwards, so that starting from this basic shape, the clamping collar 42 can easily be configured for the cooling elements 16.

For example, the connecting element 32 can initially be continuously configured with an inwardly curved middle section 50, wherein the clamping collars 42 are produced at the corresponding positions in the connecting element 32 by stamping or striking.

In addition, this may happen when the connecting element 32 is coupled with the cooling element 16, wherein the cooling element 16 is pushed by the middle section 50.

The connecting element 32 with the received cooling element 16 or the plurality of received cooling elements 16 is subsequently coupled with the line element 30.

The connecting part 32 and the line element 30 can then be soldered to one another at the coupling, so that a reliable connection is made.

The two parts may in this case be securely soldered to one another by means of the described configuration of the clamping limbs 32a, 32b and limbs 40a, 40b.

The soldering properties may in addition be improved in that compatible materials are chosen, for example aluminium sheets which each exhibit a soldering layer (AlSi with 5 to 12% Si).

To simplify production of the collector/distributor 28, this may in particular likewise be configured as an extruded profile.

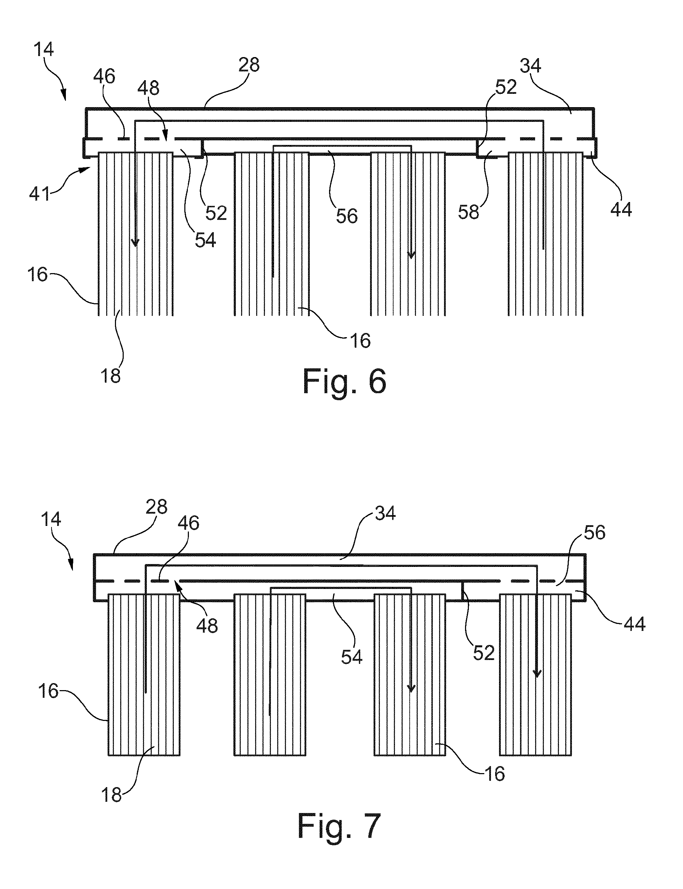

In Figure 6 the cooling device 14 is shown in a schematic plan view, wherein four separately configured cooling elements 16 are coupled at a respective end 41 with a collector/distributor 28. The outer surfaces of the cooling elements 16 shown lie on an underside 22 of a battery pack 12 which is not shown here.

The flow directions of the cooling fluid emerge from Figure 6, wherein the collector/distributor 28 exhibits separating walls 52 which are provided in the second channel 44 in the embodiment shown, in order to divide the second channel 44 into sections 54, 56, 58 which are separate from one another in flow terms. The sections 54, 56, 58 are each assigned to different cooling elements 16.

The flow of the cooling fluid within the collector/distributor 28 and in the cooling device 14 in general can be influenced via the separation walls 52. This ensures that the side 22 to be cooled is in contact with a sufficiently large outer surface of the cooling elements 16, through which a cooling fluid that is still cool flows.

The first channel 34 in this embodiment is a kind of bypass channel to the second channel 44, as it couples the two exterior cooling elements 16 to one another, while the two interior cooling elements 16 are in fluid connection with one another via the second channel 44.

An alternative embodiment is shown in Figure 7, in which only a separation wall 52 is provided which divides the second channel 44 into two different sections 54, 56.

It emerges from the arrows, which represent the flow direction of the cooling fluid, that the cooling fluid exhibits a different flow path compared with the embodiment in Figure 6. Depending on the need in terms of cooling efficiency and heat distribution in the battery pack 12, the cooling fluid flow can be adjusted accordingly by means of a correspondingly selected collector/distributor 28 or the arrangement of the separation walls 52.

By means of the number and size of the openings 48 in the partition wall 46, the flow can, in addition, be changed within the distributor/collector 28. Fine adjustment is thereby possible.

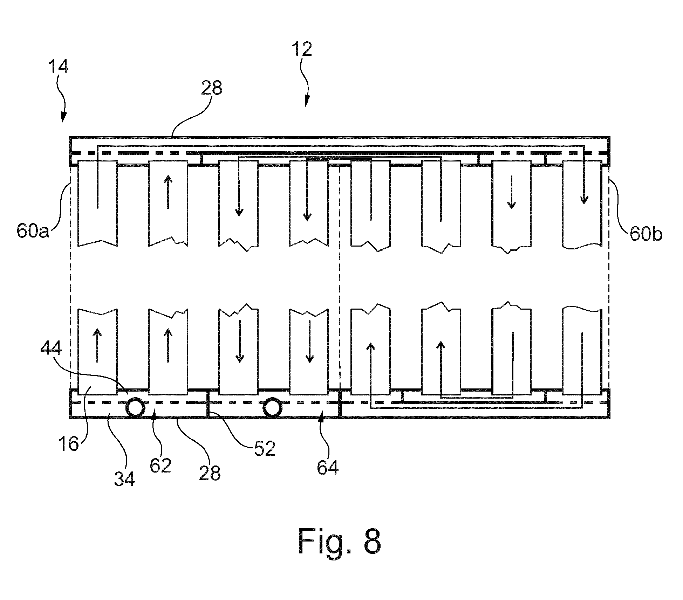

A further embodiment is shown in Figure 8, wherein the cooling device 14 is assigned to a battery pack 12 which is formed from two battery modules 60a, 60b represented by dotted lines.

The cooling device 14 in the embodiment shown exhibits a total of eight cooling elements 16 which are similarly coupled with a collector/distributor 28 at the respective end. Four cooling elements 16 are assigned to a battery module 60a, 60b in each case. The collector/distributor 28, on the other hand, extends over the entire length of the two battery modules 60a, 60b arranged side by side.

By means of the separation walls 52 within the first channel 34, the flow of cooling fluid in the cooling device 14 is controlled and an inlet and an outlet section 62, 64 defined.

The two collectors/distributors 28 in this embodiment are each configured as a mixing unit, as they both distribute as well as collecting. This mixed form is achieved in that separation walls 52 are correspondingly provided in the two channels 34, 44.

It emerges in particular from Figure 8 that the cooling elements 16 each have cooling fluid flowing through them in pairs in the same flow direction. In this way, homogeneous cooling of the battery pack 12 is achieved.

Due to the design of the cooling elements 16 with a plurality of channels 18, the preloading of the cooling elements 16 against the side 22 of the battery pack 12 and also the embodiment of the collector/distributor 28 shown, the coolant R744 can be used as the cooling fluid.

Due to the good thermal contact, only a partial surface of the side 22 to be cooled has to be in contact with the cooling elements 16. In addition, it is ensured with the cooling device 14 according to the invention that the space required, despite the use of the coolant R744 and the therefore stricter requirements in terms of the bursting pressure, is the same or even smaller.

## Claims

1. Cooling device (14) for a battery pack (12) of a drive battery assembly (10) of a hydrogen, electric or hybrid vehicle having at least two separate cooling elements (16) arranged alongside one another which each exhibit a plurality of channels (18) conducting a cooling fluid to transport heat energy away, wherein the cooling device (14) comprises at least one preloading unit (20) which presses the at least two cooling elements (16) against one side (22) of the battery pack (12) to improve thermal contact.

2. Cooling device (14) according to Claim 1, **characterized in that** the channels (18) have a hydraulic diameter of 0.5 mm to 1.5 mm, particularly 0.7 mm to 1 mm.

3. Cooling device (14) according to Claim 1 or 2, **characterized in that** a separate preloading unit (20) in each case presses a cooling element (16) against the side (22) of the battery pack (12), in particular a spring element in each case pretensions a cooling element (16) elastically.

4. Cooling device (14) according to one of the preceding claims, **characterized in that** a carrier (26) is provided between the cooling elements (16) and the preloading unit (20), in particular one carrier per cooling element (16).

5. Cooling device (14) according to one of the preceding claims, **characterized in that** the cooling device (14) comprises at least one collector and/or distributor (28) with which the cooling elements (16) are each coupled at at least one end (41), particularly at one end with a collector and at the other end with a distributor.

6. Cooling device (14) according to Claim 5, **characterized in that** the collector and/or distributor (28) is/are of multi-part, in particular two-part, design, having at least one line element (30) for the fluidic coupling of the cooling elements (16) and a connecting element (32) which seals at least one cooling element (16) in respect of the line element (30).

7. Cooling device (14) according to Claim 6, **characterized in that** the line element (30) exhibits at least one receiving opening (38) for the end receiving of the cooling elements (16).

8. Cooling device (14) according to Claim 6 or 7, **characterized in that** the line element (30) exhibits two projecting limbs (40), between which at least one cooling element (16), preferably a plurality of cooling elements (16), is received.

9. Cooling device (14) according to Claim 8, **characterized in that** the limbs (40) are enclosed by the connecting element (32) in a clamp-like and positively locking manner and/or the connecting element (32) encloses the assigned end (41) of the cooling element (16) in a sealing manner.

10. Cooling device (14) according to Claim 8 or 9, **characterized in that** the connecting element (32) seals a plurality of cooling elements (16) to a common line element (30) and seals the common receiving opening (38) between adjacent cooling elements (16), wherein the connecting element (32) has a clamping collar (42) for each cooling element (16) in the region of the receiving opening (38), which clamping collar keeps the cooling element (16) sealing.

11. Cooling device (14) according to one of Claims 5 to 10, **characterized in that** the collector/distributor (28) exhibits a first and a second channel (34, 44) via which at least two cooling elements (16) are in fluid connection with one another.

12. Cooling device (14) according to Claim 11, **characterized in that** the first and/or second channel (34, 44) run parallel to one another.

13. Cooling device (14) according to Claim 11 or 12, **characterized in that** the first or second channel (34, 44) has sections (54, 56, 58) separated from one another in flow terms which are assigned to different cooling elements (16).

14. Cooling device (14) according to one of Claims 11 to 13, **characterized in that** the first and/or second channel (34, 44) may have a hydraulic diameter of between 3 mm and 6 mm, in particular 4 mm and 5 mm.

15. Cooling device (14) according to one of the preceding claims, **characterized in that** the cooling elements (16) are extruded profiles, in particular plate-shaped profiles.
